# EUROPÄISCHE PATENTSCHRIFT

(11) **EP 0 894 456 B1**
(45) Veröffentlichungstag und Bekanntmachung des Hinweises auf die Patenterteilung: **04.07.2001**
(21) Anmeldenummer: 98109551.6
(22) Anmeldetag: 26.05.1998
(51) Int. Cl.: A47B 47/00, A47B 43/02, A47B 96/04

(54) **Aus Zusammengesteckten Teilen bestehendes Regal**
Cupboard made from interlocking parts
Placard constitué de pièces qui s'emboîtent

(30) Priorität: 02.08.1997 DE 29713792 U
(43) Veröffentlichungstag der Anmeldung: 03.02.1999
(73) Patentinhaber: KR-Porsiplast Verpackungs-systeme GmbH, 76461 Muggensturm (DE)
(72) Erfinder: Merkel, Raimund, 76593 Gernsbach (DE)
(74) Vertreter: Zipse + Habersack

(56) Entgegenhaltungen:
- FR-A- 2 517 530
- US-A- 2 350 280
- US-A- 4 062 302
- US-A- 4 373 449

## Beschreibung

Die Erfindung betrifft ein Regal, bestehend aus über Schlitze und Laschen mit Sicherungselementen zusammengesteckten Teilen, wie Rückwand, Seitenwänden, Deckel, Boden, sowie die Regalfächer bildenden, vertikalen und horizontalen Facheinteilungen.

Es ist bekannt, Regale aus einzelnen Bauteilen, wie horizontale und vertikale Facheinteilungen, Regalpfosten und Rückwände mittels Schrauben, Nieten oder durch Schweißen zu verbinden. Eine häufig angewendete Form des Regalbaus besteht darin, daß zwischen senkrechten Pfosten Regalböden eingeschraubt werden. Eine weitere, häufig anzutreffende Bauform besteht darin, daß in Senkrechtpfosten sogenannte "Fachauflagen" eingehängt oder eingeschraubt werden, auf die dann die einzelnen Fachböden mittels Schrauben an diesen befestigt werden.

Eine weitere Möglichkeit des Aufbaus von Regalen besteht darin, daß an senkrechten Wänden links und rechts in definierten Abständen Auflagen, z. B. Winkelprofile, befestigt sind, auf denen die Regalfachböden befestigt werden. Die Befestigung der Regalfachböden auf den Auflagen geschieht ebenfalls im wesentlichen durch Schrauben, Nieten oder Schweißen.

Aus dem DE 8914430 U1 ist ein regalförmiger Aufsteller mit Fachböden bekannt geworden, bei welchem eine rückwärtige Verlängerung eines Fachbodens durch einen Schlitz in der Rückwand ragt und einen mit der Rückwand abschließenden Arretierungsschlitz aufweist, durch welchen ein T-förmiges Verriegelungselement gesteckt ist. Dieser vorbekannte aus Wellpappe bestehende Aufsteller ist auf Grund seiner Gesamtkonzeption nur geeignet, leichtere Waren und Prospekte aufzunehmen. Außerdem sind die Kanten im Einschubbereich nicht abgerundet.

Der nächstliegende Stand der Technik ist aus dem Dokument US-A-4 373 449 bekannt, welches ein Regal gemäß dem Oberbegriff des Patentanspruchs 1 zeigt.

Die vorbekannten Bauformen von größeren Regalen besitzen alle den Nachteil, daß sie nur unter Zuhilfenahme von Werkzeugen und Befestigungselementen zusammengebaut und stabilisiert werden können. Weiterhin sind die durch den Zusammenbau entstandenen Facheinteilungen nicht umlaufend ohne Störkanten. Im Eckbereich der Fächer treten durch Auflageprofile, Befestigungselemente oder sonstige Applikationen Störkanten auf, die beim Be- und Entladen des Regalfaches mit empfindlichen Gütern störend wirken können. Desweiteren ist ein Nachteil darin zu sehen, daß bei der Entsorgung der nicht mehr benötigten Regale Probleme entstehen.

Der Erfindung liegt die Aufgabe zugrunde, ein Regal der eingangs genannten Art zu schaffen, das ohne Zuhilfenahme von Werkzeugen leicht aufzubauen und zu stabilisieren ist und dessen Fächer umlaufend keine Störkanten aufweisen und dessen horizontale und vertikale Facheinteilungen abgerundete Kanten im Einschubbereich besitzen. Außerdem sollen die horizontalen und vertikalen Facheinteilungen an den Kreuzungspunkten form- und kraftschüssig miteinander verbunden werden.

Zur Lösung dieser Aufgabe wird ein Regal gemäß Anspruch 1 vorgeschlagen. Der wesentliche Vorteil dieses Regals besteht darin, daß es äußerst leicht zusammengebaut und stabilisiert werden kann und daß es im Verbindungsbereich von vertikalen und horizontalen Facheinteilungen keiner weiteren Applikationen der Eckverbindungen von außen bedarf und daß es aus einem Werkstoff hergestellt werden kann. Ein weiterer Vorteil besteht darin, daß die Facheinteilung an den Umlaufflächen keinerlei Störkanten durch Stabilisierungselemente, wie z. B. Winkelprofile, Schrauben oder Nieten, aufweist. Außerdem ist am Knotenpunkt zwischen den durch Schlitze zusammensteckbaren, horizontalen und vertikalen Facheinteilungen durch Hindurchstecken eines Splints zwischen den Teilen der gefalteten, vertikalen Fachunterteilung die Stabilität des gesamten Regals mit den horizontalen Fachunterteilungen nicht nur erhöht, sondern es wird auch ein seitliches Ausweichen der senkrechten Kanten der vertikalen Facheinteilungen sicher verhindert.

Gemäß einer besonderen Ausführungsform sind nach Anspruch 2 an den Kanten der Seitenwände und den horizontalen und vertikalen Facheinteilungen je zwei Laschen mit Bohrungen angeordnet, durch welche beim zusammengebauten Regal Sicherungsstäbe gesteckt sind . Damit ist es möglich, beim Zusammenstecken der Teile und Festlegen durch die Sicherungsstangen eine außerordentlich stabile Verbindung der Teile des Regals zu gewährleisten.

Weitere vorteilhafte Ausführungsformen des Regals sind in den Ansprüchen 3 bis 7 beschrieben.

Anhand der Zeichnungen soll am Beispiel einer bevorzugten Ausführungsform das Regal gemäß der Erfindung näher erläutert werden.

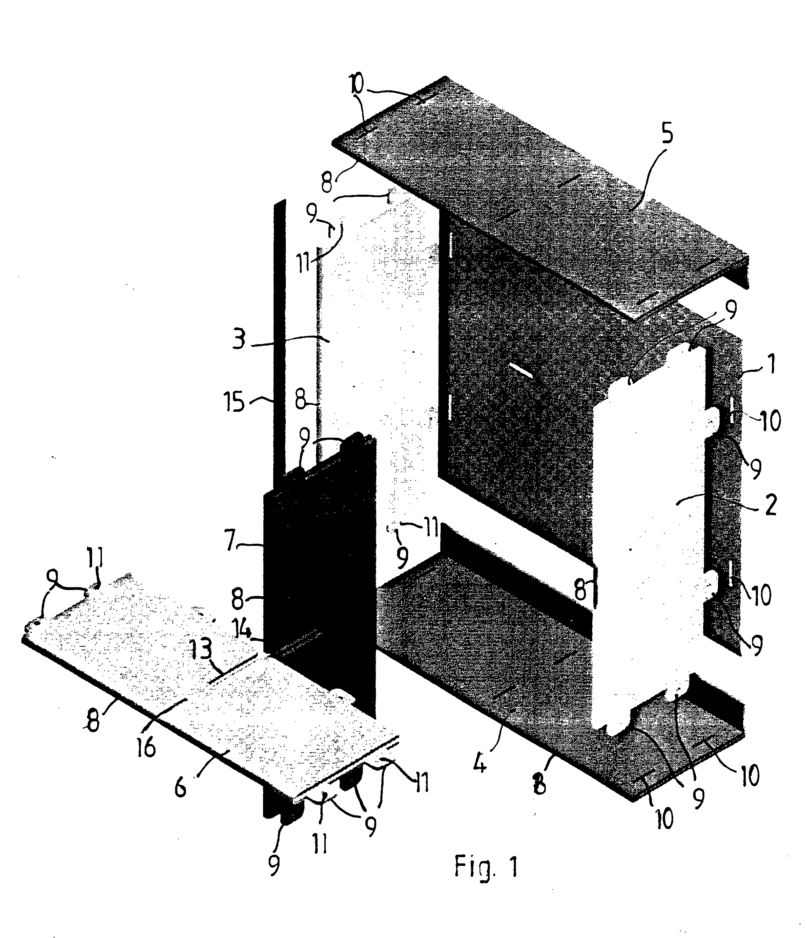

In den Zeichnungen zeigt
- **Fig. 1**: eine perspektivische Explosionszeichnung einer besonderen Ausführungsform des Regals gemäß der Erfindung.
- **Fig. 2**: zeigt eine perspektivische Abbildung des zusammengesetzten Regals.
- **Fig. 3**: zeigt eine Einzelheit "A" von Fig. 2.
- Fig. 4: Zeigt eine perspektivische Explosionszeichnung einer abgewandelten Ausführungsform des Regals gemäß der Erfindung.
- Fig. 5: zeigt eine perspektivische Ansicht des Regals gemäß Fig. 4.
- Fig. 6: zeigt eine Einzelheit "B" von Fig. 5.
- Fig. 7: zeigt perspektivische Explosionszeichnung einer abgewandelten Ausführungsform des Regals gemäß der Erfindung.
- Fig. 8: Zeigt eine perspektivische Ansicht des Regals gemäß Fig. 7.
- Fig. 9: zeigt eine Einzelheit "C" von Fig. 8.

Wie sich aus den Figuren der Zeichnungen ergibt, besteht das Regal aus zusammensteckbaren Teilen, nämlich einer Rückwand 1, zwei Seitenwänden 2, 3, einem Boden 4, einem Deckel 5 sowie horizontalen Facheinteilungen 6 und vertikalen Facheinteilungen 7, von denen der Einfachheit halber nur je eine Facheinteilung dargestellt ist.

Die Seitenwände 2, 3, der Deckel 5, der Boden 4 sowie die horizontalen und vertikalen Facheinteilungen 6, 7 bestehen aus gefalteten, rechteckförmigen Zuschnitten aus zellenförmigen Kunststoffplatten, die jeweils abgerundete Faltkanten 8 bilden. Dadurch wird erreicht, daß das Regal gemäß der Erfindung an den Umlaufflächen keinerlei Störkanten durch Stabilisierungselemente od. dgl. aufweist. Diese Kanten sind durch die Faltung des Materials stets abgerundet.

Die Seitenwände 2, 3 und die horizontalen und vertikalen Facheinteilungen 6, 7 weisen an einer Kante der gefalteten Zuschnitte jeweils zwei Laschen 9 auf, wobei die Laschen 9 der Seitenwände 2, 3 beim Zusammenbau des Regals in Schlitze 10 in der Rückwand 1, dem Boden 4 und dem Deckel 5 gesteckt werden.

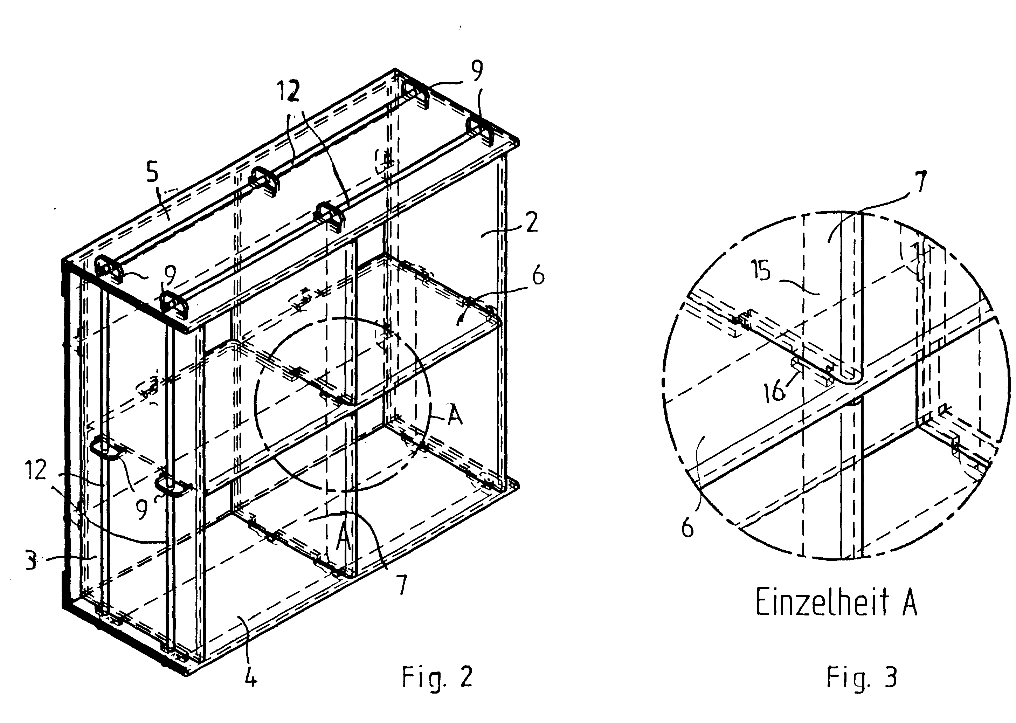

Die Laschen 9 weisen Bohrungen 11 auf, durch welche, wie aus Fig. 2 ersichtlich, beim zusammengebauten Regal Sicherungsstäbe 12 zur Verbindung und Stabilisierung des Regals gesteckt werden.

Die horizontalen Facheinteilungen 6 und die vertikalen Facheinteilungen 7 sind durch Schlitze 13, 14 ineinandersteckbar. Der Knotenpunkt zwischen den horizontalen und vertikalen Facheinteilungen 6, 7 (in Fig. 3 vergrößert dargestellt) ist durch einen Splint 15 gesichert, der zwischen die umgeklappten Teile der vertikalen Facheinteilungen 7 und einen weiteren Schlitz 16 in den horizontalen Facheinteilungen 6 gesteckt wird. Dadurch wird eine kraft- und formschlüssige Verbindung im Knotenpunkt zwischen den beiden Facheinteilungen gewährleistet. Hierdurch wird auch ein seitliches Ausweichen der senkrechten Kanten 8 der vertikalen Facheinteilungen 7 sicher verhindert.

Die unteren Laschen 9 an den Seitenteilen 2, 3 und an der senkrechten Facheinteilung 7 werden nach dem Zusammenstecken des Regals umgeklappt und mit dem Boden 4 an der Unterseite verschweißt. Es ist selbstverständlich möglich, beliebig viele vertikale und horizontale Facheinteilungen einzusetzen, wobei auch die horizontalen Facheinteilungen durch schräg verlaufende Schlitze schräg nach hinten und unten verlaufen können.

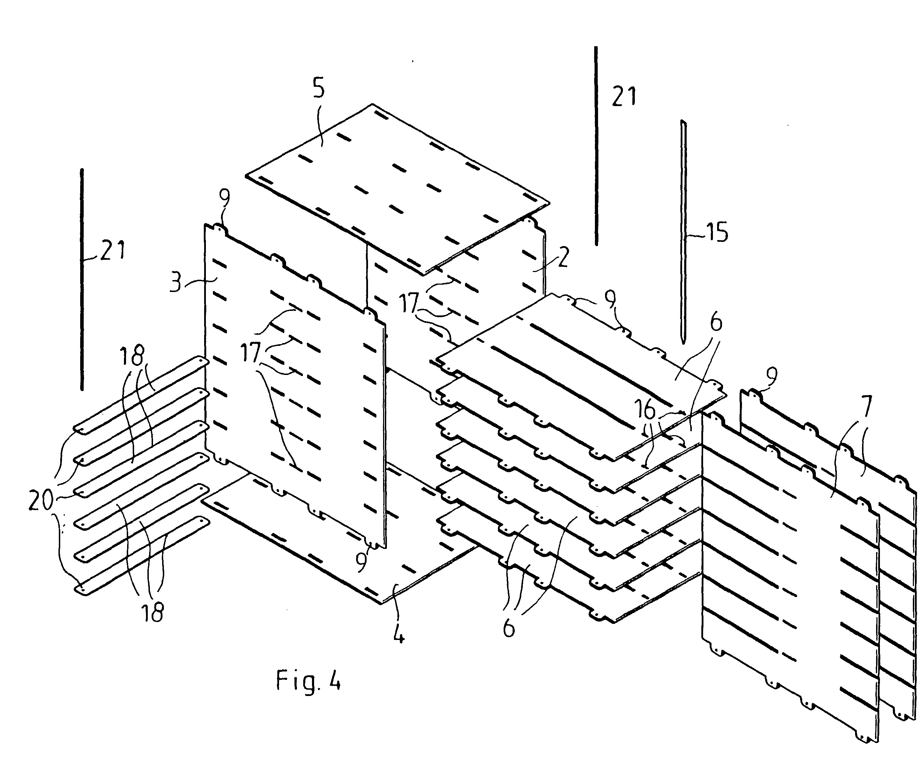

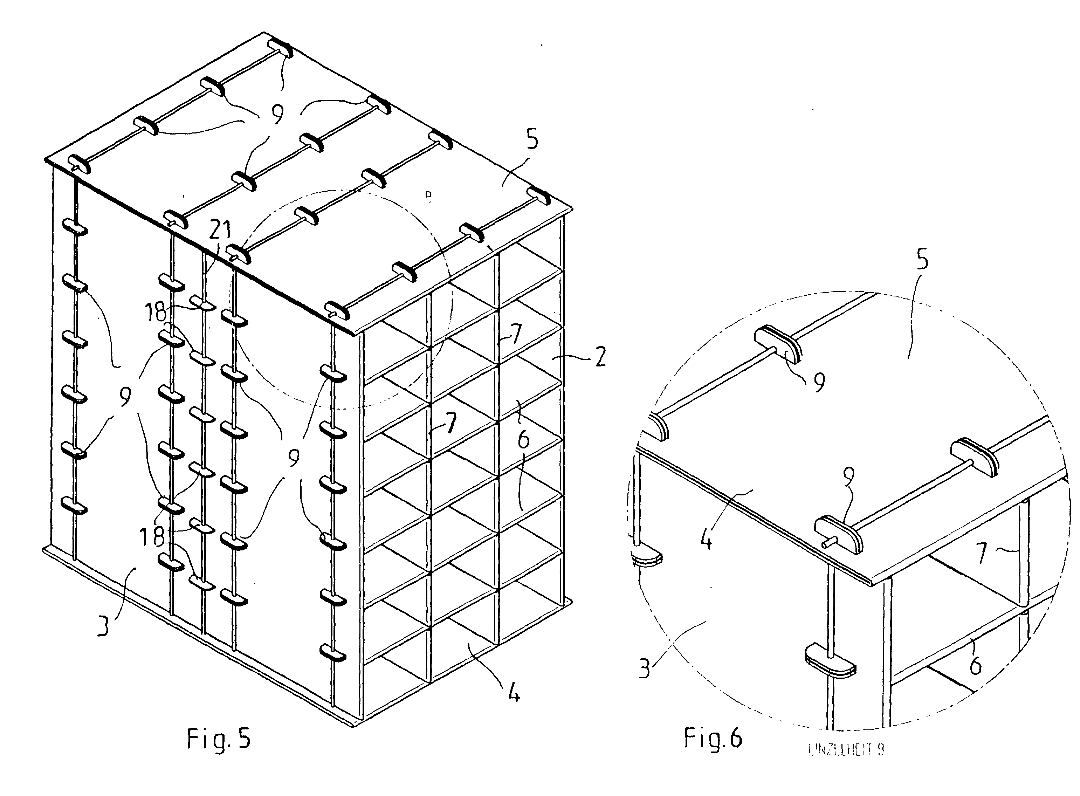

Die Figuren 4, 5 und 6 zeigen ein Regal mit zwei senkrechten und sechs horizontalen Facheinteilungen 7, 6. Da bei dieser Ausführungsform des Regals eine Rückwand oder eine Zwischenwand fehlt, sind in den Seitenwänden 2, 3 Schlitze 17 vorgesehen, durch welche Stützlaschen 18 hindurch-gesteckt sind und dadurch die horizontalen Facheinteilungen, insbesondere im Bereich der Längsschlitze 19, unterstützen. Die beiden Enden der Stützlaschen 18 sind mit Bohrungen 20 versehen, durch welche Stangen 21 gesteckt sind. Dadurch ergibt sich ein besonders stabiles Regal, wie es perspektivisch in Fig. 5 und mit einer Einzelheit in Fig. 6 dargestellt ist.

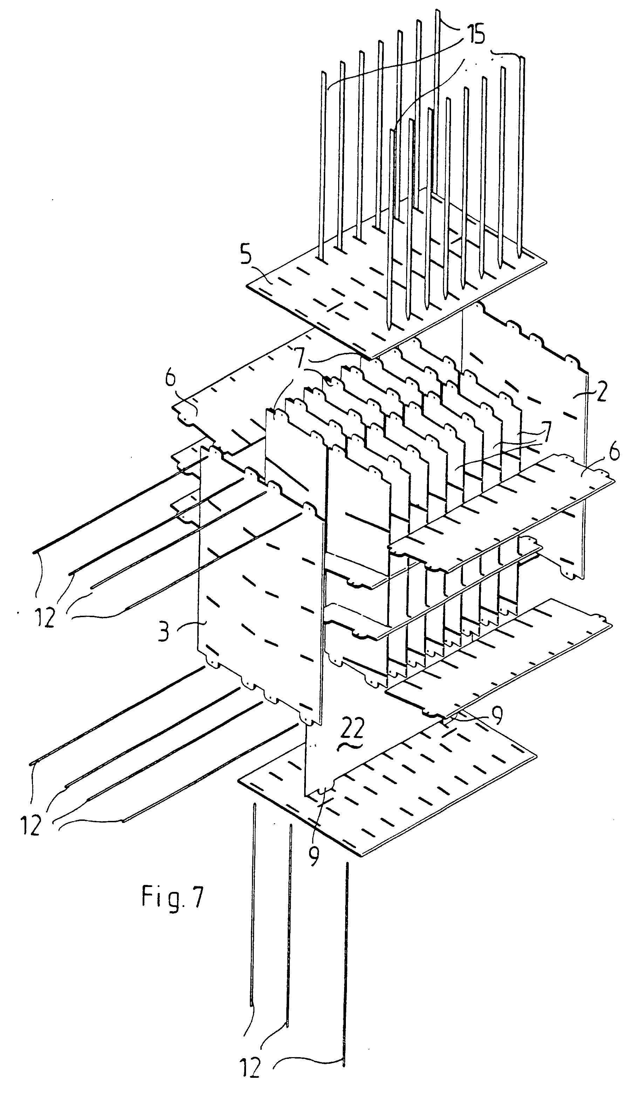

In Fig. 7 ist eine andere Ausführungsmöglichkeit des Regals gemäß der Erfindung perspektivisch und als Explosionszeichnung dargestellt. Die Rückwand 22 bildet gleichzeitig die Mittelwand des Regals derart, daß die horizontalen und vertikalen Facheinteilungen 6, 7 zu beiden Flächenseiten der Wand 22 verlaufen. Dabei sind die Seitenwände 2, 3, der Boden 4 und der Deckel 5 mittig zur Mittelwand 22 angeordnet und bestimmen die Gesamtbreite und -tiefe des Regals. Die Mittelwand 22 ist mit ihren unteren Laschen 9 in Schlitze des Bodens 4 und mit ihren oberen Laschen 9 in Schlitze des Deckels 5 eingesteckt.

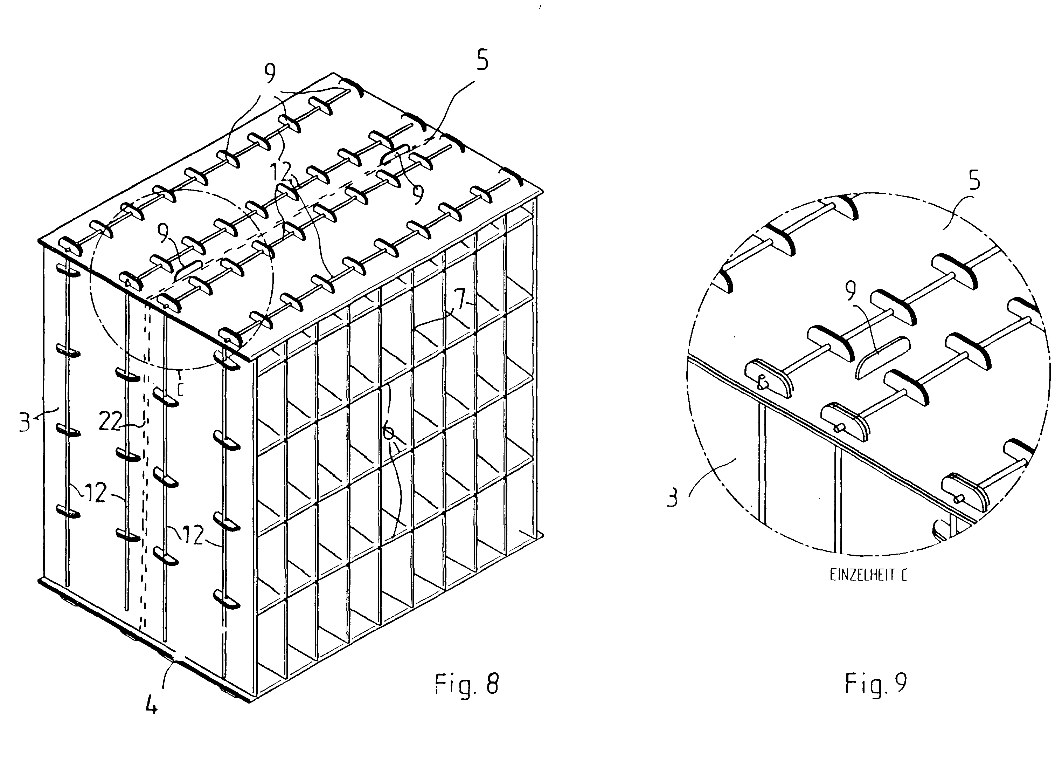

Dadurch ergibt sich, wie in Fig. 8 perspektivisch und in Fig. 9 als Einzelheit von Fig. 8 dargestellt, ein äußerst stabiles Regal, das von beiden Seiten zugänglich ist.

Selbstverständlich können die Merkmale der Erfindung auch bei solchen Regalen Anwendung finden, bei welchen keine zusätzlichen horizontalen Facheinteilungen vorgesehen sind. Die horizontalen Facheinteilungen werden dann nur durch den Boden und den Deckel gebildet.

## Patentansprüche

1. Regal, bestehend aus über Schlitze und Laschen mit Sicherungselementen zusammengesteckten Teilen, wie Rückwand, Seitenwänden, Deckel, Boden, sowie die Regalfächer bildenden, vertikalen und horizontalen Facheinteilungen, wobei die Seitenwände (2, 3), der Deckel (5) und der Boden (4) sowie die horizontalen und vertikalen Facheinteilungen (6, 7) aus gefalteten, rechteckförmigen, Zuschnitten aus zellenförmigen Kunststoffplatten bestehen, dadurch gekennzeichnet, daß der Knotenpunkt zwischen den durch Schlitze (13, 14) zusammengesteckten, horizontalen und vertikalen Facheinteilungen (6, 7) durch einen Splint (15) gesichert ist, der zwischen die umgeklappten Teile der vertikalen Facheinteilungen (7) und einen weiteren Schlitz (16) in den horizontalen Facheinteilungen (6) zur kraftschlüssigen Verbindung gesteckt ist .

2. Regal nach Anspruch 1, ***dadurch gekennzeichnet,*** daß an den Kanten der Seitenwände (2, 3) und den horizontalen und vertikalen Facheinteilungen (6, 7) je zwei Laschen (9) mit Bohrungen (11) angeordnet sind, durch welche beim zusammengebauten Regal Sicherungsstäbe (12) gesteckt sind

3. Regal nach Anspruch 1 und 2, ***dadurch gekennzeichnet*,** daß die an der Unterseite des Bodens (4) herausragenden Laschen (9) umgeklappt und mit dem Boden (4) verschweißt sind.

4. Regal nach einem oder mehreren der vorhergehenden Ansprüche, ***dadurch gekennzeichnet*,** daß mehrere vertikale Facheinteilungen vorgesehen sind, in welche über schräg nach unten und nach der Rückwand verlaufende Schlitze schräg nach hinten und unten verlaufende, horizontale Facheinteilungen eingesteckt sind.

5. Regal nach einem oder mehreren der vorhergehenden Ansprüche, ***dadurch gekennzeichnet*,** daß durch Schlitze (17) in die Seitenwände (2, 3 ) gesteckte, über die gesamte Regalbreite reichende Stützlaschen (18 ) die horizontalen Facheinteilungen (6 ) im Bereich der Regalmitte unterstützen.

6. Regal nach Anspruch 5., ***dadurch gekennzeichnet,*** daß die Enden der Stützlaschen mit Bohrungen (20) versehen sind, durch welche Stangen (21) gesteckt sind.

7. Regal nach einem oder mehreren der vorhergehenden Ansprüche, ***dadurch gekennzeichnet***, daß die Rückwand gleichzeitig eine Mittelwand (22) des Regals bildet, derart, daß die horizontalen und vertikalen Facheinteilungen (6, 7) zu beiden Flächenseiten der Mittelwand (22) verlaufen und die Seitenwände ( 2, 3 ), der Boden (4 ) und der Deckel (5 ) mittig zur Mittelwand angeordnet sind und die Gesamtbreite und -tiefe des Regals bestimmen.

## Claims

1. Shelf unit composed of parts, such as a rear wall, side walls, top and bottom, and vertical and horizontal dividers forming the compartments of the shelf unit, which parts are interinserted by means of slots and tabs with locking members, the side walls (2, 3), the top (5), the bottom (4) and the horizontal and vertical dividers (6, 7) comprising folded rectangular blanks obtained from sheets of expanded or cellular plastics material, characterised in that the intersection between the horizontal and vertical dividers (6, 7) which are interinserted by means of slots (13, 14) is locked by a pin (15) which is inserted between the folded-over parts of the vertical dividers (7) and a further slot (16) in the horizontal dividers (6) to produce a frictionally secured joint.

2. Shelf unit according to claim 1, ***characterised in that*,** arranged at the edges of the side walls (2, 3) and the horizontal and vertical dividers (6, 7), are respective pairs of tabs (9) having holes (10) through which locking rods (12) are inserted when the shelf unit has been assembled.

3. Shelf unit according to claims 1 and 2, ***characterised in that*** the tabs (9) which project from the underside of the bottom (4) are folded over and welded to the bottom (4).

4. Shelf unit according to one or more of the foregoing claims, ***characterised in that*** a plurality of vertical dividers are provided, in which are inserted horizontal dividers which, by means of slots which extends downwards and towards the rear wall at an angle, extend downwards and rearwards at an angle.

5. Shelf unit according to one or more of the foregoing claims, ***characterised in that*** supporting tie-strips (18) which are inserted into the side walls (2, 3) through slots (17) and which extend across the entire width of the shelf unit support the horizontal dividers (6) in the region of the centre of the shelf unit.

6. Shelf unit according to claim 5, ***characterised in that*** the ends of the supporting tie-strips are provided with holes (20) through which rods (21) are inserted.

7. Shelf unit according to one or more of the foregoing claims, ***characterised in that*** the rear wall also forms a centre wall (22) of the shelf unit in such a way that the horizontal and vertical dividers (6, 7) extend to the two main faces of the centre wall (22) and the side walls (2, 3), the bottom (4) and the top (5) are positioned with the centre wall at their centres and define the overall width and depth of the shelf unit.

## Revendications

1. Étagère composée d'éléments, tels qu'une paroi arrière, des parois latérales, un dessus, un fond, ainsi que des cloisons horizontales et verticales formant les compartiments, qui sont emboîtés à l'aide de fentes et de languettes munies d'éléments de sécurité, sachant que les parois latérales (2, 3), le dessus (5) et le fond (4), ainsi que les cloisons horizontales et verticales (6, 7) sont composés de pièces rectangulaires pliées découpées dans des plaques de matière plastique alvéolaire, caractérisée en ce que le point de jonction entre les cloisons horizontales et verticales (6, 7) emboîtées à l'aide des fentes (13, 14) est assuré par une goupille fendue (15) qui est enfoncée entre les parties rabattues des cloisons verticales (7) et une autre fente (16) dans les cloisons horizontales (6) pour réaliser un assemblage par adhérence.

2. Étagère selon la revendication 1, caractérisée en ce que deux languettes (9) comportant des perçages (11) sont disposées sur les arêtes des parois latérales (2, 3) et sur les cloisons horizontales et verticales (6, 7), dans lesquelles on fait passer des barres de sécurité (12) lorsque l'étagère est montée.

3. Étagère selon les revendications 1 et 2, caractérisée en ce que les languettes (9) dépassant de la face inférieure du fond (4) sont rabattues et soudées au fond (4).

4. Étagère selon l'une ou plusieurs des revendications précédentes, caractérisée en ce que plusieurs cloisons verticales sont prévues, dans lesquelles des cloisons horizontales s'étendant en biais vers l'arrière et vers le bas sont emboîtées par l'intermédiaire de fentes s'étendant en biais vers le bas et vers la paroi arrière.

5. Étagère selon l'une ou plusieurs des revendications précédentes, caractérisée en ce que des languettes de support (18) qui s'étendent sur toute la largeur de l'étagère et qui sont enfoncées dans des fentes (17) ménagées dans les parois latérales (2, 3) soutiennent les cloisons horizontales (6) dans la zone médiane de l'étagère.

6. Étagère selon la revendication 5, caractérisée en ce que les extrémités des languettes de support sont munies de perçages (20) que traversent des barres (21).

7. Étagère selon l'une ou plusieurs des revendications précédentes, caractérisée en ce que la paroi arrière forme en même temps une paroi médiane (22) de l'étagère, et ce, de telle sorte que les cloisons horizontales et verticales (6, 7) s'étendent de part et d'autre de la paroi médiane (22) et que les parois latérales (2, 3), le fond (4) et le dessus (5) soient disposés de manière centrée par rapport à la paroi médiane et déterminent la largeur et la profondeur totales de l'étagère.
